# FASCICULE DE BREVET EUROPEEN

(11) **EP 3 359 636 B1**
(45) Date de publication et mention de la délivrance du brevet: **17.01.2024**
(21) Numéro de dépôt: 16790698.1
(22) Date de dépôt: 06.10.2016
(51) Int. Cl.: C12C 7/26

(54) **PROCÉDÉ DE FABRICATION D'UNE BIÈRE CONTENANT UNE TENEUR EN HYDRATES DE CARBONE RÉDUITE ET BIÈRE ASSOCIÉE**
VERFAHREN ZUR HERSTELLUNG EINES BIERS MIT NIEDRIGEM KOHLENHYDRATGEHALT UND ZUGEHÖRIGES BIER
METHOD FOR PRODUCING A BEER CONTAINING A REDUCED CARBOHYDRATE CONTENT AND ASSOCIATED BEER

(30) Priorité: 07.10.2015 FR 1559520
(43) Date de publication de la demande: 15.08.2018
(73) Titulaire: Di Pompeo, Christophe, 59000 Lille (FR); Forest, Olivier, 59620 Monceau Saint Waast (FR)
(72) Inventeur: Di Pompeo, Christophe, 59000 Lille (FR); Forest, Olivier, 59620 Monceau Saint Waast (FR)
(74) Mandataire: RVDB
(86) Numéro de dépôt international: PCT/IB2016/055989
(87) Numéro de publication internationale: WO 2017/060848

(56) Documents cités:
- EP-A1- 1 357 176
- WO-A1-03/010277
- DE-A1- 3 028 165
- GB-A- 2 056 484
- US-A- 3 852 495
- US-A- 4 355 047

## Description

### DOMAINE TECHNIQUE

La présente invention concerne un procédé de fabrication d'une bière contenant une teneur totale en hydrates de carbone réduite et notamment une teneur en sucres réduite ainsi qu'une bière contenant une quantité réduite en hydrates de carbone, notamment de sucres et pouvant être obtenue par ledit procédé.

### ART ANTERIEUR

Le procédé classique de fabrication de la bière comporte 6 étapes avant l'embouteillage.

Durant la première étape de concassage, le malt est broyé ; le contenu du grain est écrasé et expulsé de son enveloppe afin de favoriser l'extraction des enzymes naturelles du grain et de l'amidon qu'il contient.

La deuxième étape est l'empâtage qui est la première étape du brassage. Elle consiste à tremper et remuer (brasser) le malt concassé dans de l'eau chaude afin de procéder à l'extraction de l'amidon contenu dans le malt. Le mélange malt concassé et eau s'appelle la maïsche. Durant cette étape la maïsche est chauffée à différents paliers de température. On chauffe d'abord pendant un premier palier d'environ 15 minutes pour que la maïsche atteigne une température d'environ 50°C afin que les protéines complexes non solubles du malt se transforment en acides aminés, c'est ce que l'on appelle la protéolyse. Cette protéolyse est due à l'action de deux enzymes, la protéinase et la peptidase, contenues dans le malt. On chauffe ensuite durant un second palier, afin que la maïsche atteigne une température aux alentours de 62°C. Ce palier permet la gélatinisation de l'amidon et sa transformation en sucres fermentescibles sous l'action de 5 enzymes, la béta amylase, l'alpha amylase, la dextrinase limite, la maltase et la saccharose. L'amidon est transformé en sucres dont certains sont fermentescibles (notamment dextrines, maltotétraose, maltotriose, maltose, sucrose, glucose et fructose). Cette étape dure entre 30 et 45 minutes. La maïsche qui ne contient plus d'amidon est ensuite chauffée à une température située entre 68°C et 75°C ; à ces températures l'alpha amylase contenue dans le grain intervient lors d'une réaction de fermentation pour transformer le dextrose et le maltose en sucres non fermentescibles (dextrines) qui donneront du corps et de la rondeur à la bière. Cette étape dure entre 30 et 60 minutes.

La troisième étape est la filtration. Le mélange obtenu après l'étape de brassage, encore appelé brassin est filtré pour séparer la partie liquide appelée moût des résidus de malt épuisé (enveloppe des grains et autres particules insolubles) qui se nomment les drêches. Les drêches restantes dans la cuve sont ensuite rincées avec de l'eau chauffée à environ 76°C afin d'en extraire un maximum de sucres encore présents. L'eau de rinçage qui contient ces sucres est ajoutée au moût.

La quatrième étape consiste à cuire le moût. Le moût est porté à ébullition pendant 1 à 2 heures. La cuisson permet de stabiliser et de stériliser le moût mais c'est aussi à cette étape que le houblon est ajouté au moût, il s'agit du houblonnage. Son rôle est important, il fournit au moût, par l'intermédiaire de ses résines, deux acides qui stérilisent, conservent et donnent l'amertume à la bière. On l'incorpore généralement une première fois en début de cuisson et on en ajoute soit de temps en temps ou à la fin pour garder un peu des huiles essentielles du houblon. La cuisson permet aussi de coaguler les protéines du malt et favoriser la limpidité et stériliser le moût. On peut aussi ajouter d'autres produits aromatiques.

La cinquième étape est le refroidissement. Après ébullition le moût encore trouble contient des résidus de houblon et de protéines qui décantent au fond de la cuve. Il est séparé des résidus solides puis refroidit afin de le mettre à température idéale pour la fermentation.

Les étapes d'empâtage, de filtration, de cuisson et de refroidissement précitées constituent le brassage de la bière.

La sixième étape consiste à fermenter le moût. Le moût, qui ne contient pas d'amidon, est transféré en cuve de fermentation puis il est ensemencé avec une levure à bière. Il existe 2 méthodes de fermentation : la fermentation haute, qui se déroule à une température d'environ 22°C et la fermentation basse, qui se déroule à une température d'environ 12°C. Quelques heures après l'ensemencement, la levure s'est déjà bien multipliée. Le glucose est transformé en CO₂ et en eau du fait de la respiration de la levure qui consomme l'oxygène contenu dans le mélange. Lorsque l'oxygène vient à manquer, la levure transforme alors les sucres fermentescibles en alcool et en gaz carbonique (étape anaérobique). Cette fermentation dite primaire va durer entre 4 et 8 jours puis la bière dite "bière verte" sera transférée en cuve de garde pour subir une fermentation dite secondaire, pendant quelques semaines à température plus faible. Durant cette fermentation secondaire, les levures continuent de fermenter et de transformer les sucres fermentescibles restant en alcool et en CO₂ et les particules solides décantent en fond de cuve ce qui clarifie la bière. Une fois la fermentation secondaire avancée, la levure commence à sentir le manque de matières fermentescibles et entre en dormance.

La bière qui est la phase liquide obtenue en fin de fermentation secondaire est alors embouteillée ou conditionnée en fûts ou en cannette. Pour les bières re-fermentées en bouteilles on ajoute une petite quantité de sucre et de levures dans la bière plate puis les bouteilles sont capsulées et mises en chambre tempérée afin de favoriser la re-fermentation. Pour les bières classiques, on injecte du CO₂ dans la bière plate puis la bouteille est de suite capsulée.

Outre le sucre ajouté et l'alcool, la bière contient donc naturellement, du fait de son procédé de fabrication, une quantité non négligeable de glucides ou hydrates de carbone, dont des sucres. La bière est un mélange complexe de sucres comprenant des sucres simples comme le glucose et le maltose et le maltotriose, qui peuvent être consommés par la levure et des sucres plus complexes qui ne peuvent être consommés par cette dernière. On estime qu'une bière obtenue selon le procédé classique précité peut contenir jusqu'à 12g/L d'hydrates de carbone. La quantité de sucres et le type de sucres produit dépendent de la levure utilisée. Dans la présente invention, le terme bière fait référence à une boisson fermentée obtenue par utilisation exclusive d'une levure ou d'un mélange de levures choisis parmi le genre *Saccharomyces* et plus particulièrement parmi les espèces *Saccharomyces cerevisiae et Saccharomyces carlsbergensis.*

La consommation de bière n'est donc pas sans conséquence à la fois pour les personnes qui surveillent leur apport calorique et les personnes souffrant de diabète.

On a donc cherché à produire une bière qui comporte une concentration en sucres moins élevée.

Ainsi, le document CA 332104 A décrit un procédé de fabrication de bière dite « sans sucre » qui comprend une étape d'ajout d'eau afin de modifier la densité du malt de blé après la protéolyse. On ajoute ensuite le houblon et l'on chauffe pour coaguler les albumines provenant du malt. Durant l'étape de fermentation, la densité est également ajustée avant ajout des levures. C'est cet ajustement de la densité qui permet de réduire la quantité de sucres.

Le document EP 1 357 176 A décrit un procédé d'une boisson fermentée qui n'est pas une bière au sens de l'invention. En effet, la levure utilisée est une levure pour fabriquer du saké ou du vin. De telles levures produisent des mélanges de sucres différents de ceux produits par les levures du genre *Saccharomices.*

Le document US 4 355 047 B décrit un procédé de fabrication d'une bière qui comprend l'ajout d'une pullulanase de riz et éventuellement d'une diastase ou d'une beta amylase de malt. La bière obtenue présente un taux de sucres réduit et une teneur totale en hydrates de carbone minimale égale à 0,78g/100 mL, obtenue par la combinaison de la pullulanase et d'une beta amylase de malt. La pullulanase permet de réduire notamment le pullulane en maltotriose consommable par la levure. La bêta amylase va également réduire des sucres complexes en hydrolysant les liaisons bêta 1-6 des sucres.

Le document DE 30 28 165 A1 décrit un procédé de fabrication d'une bière à teneur en hydrate de carbone réduite. Selon le procédé décrit dans ce document, la bière est obtenue par fermentation d'un moût avec la levure *Saccharomyces uvarum.* Une pullulanase capable d'hydrolyser les liaisons alpha 1-6 des dextrines limites en liaisons alpha 1-4 dégradables, lesquelles sont dégradables par les enzymes du moût est ajoutée lors de la fermentation. Cette dégradation permet de diminuer la teneur en carbohydrates non utilisable par la levure et restant donc dans la bière obtenue à l'issu du procédé.

Un but de la présente invention est de proposer un nouveau procédé de fabrication d'une bière contenant une concentration réduite en hydrates de carbone, notamment en sucres, par rapport à une bière obtenue selon le procédé classique précité.

Un autre but de la présente invention est de proposer un procédé qui permet d'obtenir une bière dont la teneur totale en hydrates de carbone est inférieure à celle de la bière de l'art antérieur.

Un autre but de la présente invention est de proposer un procédé qui permet de produire une bière dont la teneur totale en hydrates de carbone est réduite et qui soit agréable à boire.

### BREVE DESCRIPTION DE L'INVENTION

Pour atteindre au moins un des buts précités, la présente invention propose un procédé de fabrication d'une bière selon lequel on prépare un moût par brassage d'un mélange contenant de l'eau et du malt d'une céréale ou un mélange de malts, puis après refroidissement dudit moût, on ajoute une levure *Saccharomyces cerevisiae* et
· De manière caractéristique, selon l'invention, après refroidissement dudit moût, on ajoute une enzyme choisie parmi les dextrinases et les mélanges de dextrinases.

Selon l'invention, on n'ajoute aucune autre levure que celles précitées et l'on n'ajoute aucune autre enzyme que les dextrinases. On ajoute donc uniquement une enzyme choisie parmi les dextrinases et les mélanges de dextrinases.

De manière surprenante, il s'est avéré que l'ajout d'une dextrinase ou des dextrinases permettait de réduire encore la quantité de sucre dans la bière. Il semble que les dextrinases permettent de réduire les dextrines et probablement d'autres sucres contenus dans la bière notamment en maltose et glucose et probablement fructose. Sans être liés par cette explication, les déposants expliquent la baisse considérable du taux d'hydrates de carbone total notamment par le fait que le maltose, le fructose et le glucose sont consommés en priorité par la levure avant le maltotriose. En produisant plus de glucose et de maltose grâce à la dextrinase, on baisse la concentration en hydrates de carbone totale de la bière. La production de maltotriose par la pullulanase de riz ne permet pas une telle réduction.

Avantageusement, on ajoute ladite enzyme en même temps que ladite levure ou peu après l'ajout de ladite levure.

Avantageusement, la levure ou le mélange de levures ajouté permet une fermentation haute température, c'est-à-dire une fermentation à une température sensiblement égale ou supérieure à 18°C et sensiblement égale ou inférieure à 30°C et en particulier sensiblement égale ou inférieure à 26°C. On utilise donc une levure de l'espèce *Saccharomyces cerevisiae.*

Les hydrates de carbone qui vont principalement être transformés sont les sucres complexes (ou hydrates de carbone complexes) qui ne peuvent être consommés par les levures lors de leur respiration ou lors de la réaction de fermentation anaérobique. La dextrinase va notamment transformer les dextrines en glucose et maltose qui vont être consommés par la levure. Le fait d'augmenter la quantité de sucres disponibles pour la levure permet également de réduire la quantité de malt utilisée ou d'utiliser un mélange de malts dont certains contiennent moins d'enzymes naturelles. Le fait d'utiliser une levure du genre *Saccharomices cerevisiae* permet de produire des composés, notamment des aldéhydes qui confèrent à la bière toute sa saveur.

### DESCRIPTION DETAILLEE DE L'INVENTION

Avantageusement, on ajoute de l'oxygène gazeux dans le moût avant l'ajout de ladite levure. Cet ajout d'oxygène permet à la levure de se multiplier. L'ajout de dioxygène peut se faire, par exemple, par bullage d'air dans le moût.

Avantageusement, on refroidit ledit mélange à une température sensiblement égale ou supérieure à 13°C et sensiblement égale ou inférieure à 21°C et notamment sensiblement égale à 19°C. A cette température, la levure va consommer l'oxygène rajouté dans le moût, se reproduire puis démarrer la fermentation.

On ajoute une enzyme de type dextrinase ou un mélange d'enzymes de type dextrinase et de préférence seulement une dextrinase ou un mélange de dextrinases à l'exception d'autre(s) type(s) d'enzymes. On agit ainsi exclusivement sur les dextrines. C'est le mérite des Demandeurs que d'avoir constaté qu'il est possible de diminuer significativement la teneur totale en hydrates de carbone de la bière en réduisant la teneur en une catégorie particulière de sucres tout en conservant une boisson dont la teneur en alcool est tolérée pour une bière (de 2 à 12° et plus particulièrement de 2° à 10° ou plus particulièrement de 2° à 8°) et qui reste agréable à boire.

Selon un mode de mise en oeuvre particulier de l'étape de brassage :
- on chauffe un mélange d'eau et d'au moins un malt d'une céréale avec un premier palier à une température sensiblement égale ou supérieure à 45°C et sensiblement égale ou inférieure à 55°C, notamment sensiblement égale à 50°C pendant une durée sensiblement égale ou supérieure à 10 minutes et sensiblement égale ou inférieure à 20 min, notamment sensiblement égale à 15 minutes, pour réaliser la protéolyse ;
- on chauffe durant un second palier à une température sensiblement égale ou supérieure à 68°C et sensiblement égale ou inférieure à 75°C, notamment sensiblement égale à 72°C, pour favoriser l'action des alpha amylases ;

- on filtre ledit mélange obtenu et l'on rince éventuellement les drêches obtenues ;
- on porte à ébullition la phase liquide obtenue par filtration pendant une durée sensiblement égale ou supérieure à 1 heure et sensiblement égale ou inférieure à 3 heures, de préférence sensiblement égale à 2 heures, en ajoutant éventuellement du houblon en une ou plusieurs fois durant ladite ébullition.

Selon un mode de réalisation particulier, après ledit premier palier, on chauffe ledit mélange durant un palier intermédiaire à une température supérieure ou égale à 62°C et inférieure ou égale à 63°C et éventuellement on filtre ledit mélange sans réaliser ledit deuxième palier de chauffe. Ce palier intermédiaire peut éventuellement remplacer le deuxième palier.

Selon un mode de réalisation, on vérifie que le moût obtenu après ébullition ne contient plus d'amidon. Cette étape peut être mise en oeuvre, par exemple avec un dosage à l'eau iodée.

Selon un mode de réalisation qui peut être combiné avec l'un quelconque de ceux précités, on maintient le pH du moût obtenu après refroidissement et avant l'ajout de levure(s) à une valeur sensiblement égale ou supérieure à 4,5 et sensiblement égale ou inférieure à 6,5 et de préférence à une valeur sensiblement égale à 5,2. Lors de la fermentation de la levure, on maintient le pH à une valeur sensiblement égale ou supérieure à 4 et sensiblement égale ou inférieure à 5. Un tel pH favorise l'action des enzymes ajoutées en particulier des dextrinases.

Selon un mode de mise en oeuvre qui peut être combiné à l'un quelconque des modes de mise en oeuvre précités, on laisse fermenter ledit mélange obtenu après refroidissement et ajout de ladite enzyme et de ladite levure et on laisse la température dudit mélange en cours de fermentation atteindre une valeur sensiblement égale ou supérieure à 20°C et sensiblement égale ou inférieure à 30°C et notamment sensiblement égale à 24°C. Cette fermentation exothermique permet également de favoriser l'action des enzymes, notamment des dextrinases.

Avantageusement, on laisse fermenter ledit mélange pendant une durée sensiblement égale ou supérieure à 1 jour et sensiblement égale ou inférieure à 10 jours et en particulier une durée sensiblement égale à 7 jours. Cette durée permet de bien réduire la teneur en sucres de la bière.

On peut également, faire, en outre fermenter une seconde fois ledit mélange pendant une durée sensiblement égale ou supérieure à 7 jours et sensiblement égale ou inférieure à 20 jours et notamment sensiblement égale à 15 jours à une température sensiblement égale ou supérieure à 0°C. La température de 0°C permet la décantation des levures et celle des polyphénols et des antho cyanogènes qui s'associent avec des protéines à haut poids moléculaire : la bière se clarifie.

La quantité d'enzymes n'est pas limitée selon l'invention. L'Homme du Métier est à même d'en doser la concentration afin de réguler la teneur en sucre et notamment en dextrines restant dans la bière. Ainsi, par exemple, les Demandeurs ont constaté que l'on peut ajouter au moins une dextrinase ou un mélange de dextrinases dans une quantité telle que la concentration en dextrinase(s) ajoutée(s) est sensiblement égale ou supérieure à 5g/100L et sensiblement égale ou inférieure à 30g/100 L et notamment sensiblement égale à 10g/ 100 L.

Selon un mode de mise en oeuvre qui peut être combiné avec l'un quelconque de ceux précités, on ajoute une quantité de levure donnée permettant d'obtenir une concentration en levure dans le moût sensiblement égale ou supérieure à 15 000 000 de cellules de levure par cm³ de moût.

Avantageusement, on laisse la levure ou les levures se multiplier pour obtenir une concentration en cellule de levure sensiblement égale ou supérieure à 45 000 000 de cellules de levure(s) par cm³ avant le début de fermentation.

L'invention n'est pas limitée à un malt particulier ou à un mélange de malts particulier. Ainsi, ledit malt peut être choisi parmi le malt d'orge, le malt de blé, le malt de sorgo et les mélanges d'au moins deux de ces malts. Il est également possible d'ajouter des grains crus de riz et/ou de maïs, éventuellement mélangés à du malt d'orge. Le malt doit de préférence contenir suffisamment d'enzymes naturelles pour un brassage sans ajout d'enzyme(s)

Il est également possible, selon l'invention d'ajouter avant la mise en bouteille un additif choisi parmi les arômes, les édulcorants naturels ou de synthèse, les gélifiants (gélatine ou carraghénane, par exemple), les ajusteurs de pH, les houblons pré isomérisés et/ou les agents moussants.

Il est également possible d'ajouter lors de la mise en bouteille (notamment avant la mise en bouteille et après la seconde fermentation) au moins un sucre simple apte à être consommé par la fermentation de la levure. Cet ajout ne va pas augmenter le taux de sucre car les enzymes ajoutées au moût restent actives.

La présente invention concerne également une bière qui contient une concentration totale en hydrates de carbone sensiblement égale ou inférieure à 0,2 g/100 mL et notamment sensiblement égale à 0,17 g/100mL.

### DEFINITIONS

Le terme « consommer » et tous les termes affiliés désignent la disparition d'un composé du fait d'une réaction chimique induite par la levure, que cette réaction soit due à la respiration de la levure ou à sa fermentation.

Le terme « hydrate de carbone » désigne tout composé organique contenant un groupe carbonyle (aldéhyde ou cétone) et au moins deux groupes hydroxyle (-OH). Le terme « hydrate de carbone» englobe donc les hydrates de carbone simples ou sucres simples, tels que le glucose, le saccharose, le lactose, le fructose, le sorbitol et le mannose et les hydrates de carbone complexes ou sucres complexes, tels que notamment, le glycogène, l'amidon et la cellulose. En référence au moût obtenu par brassage, le terme « hydrate de carbone » fait référence à un mélange de maltose, d'au moins un des hydrates de carbone simples précités à l'exception du lactose et de cellulose. En effet, classiquement un moût comprend 40% en masse de maltose, 10% en masse des hydrates de carbone simples précités (mélange de sucres simples) et 50% d'hydrates de carbone complexes, dont des dextrines et de la cellulose résiduelle. Le moût ne contient en revanche plus d'amidon.

La quantité totale en hydrates de carbone de la bière est mesurée selon la méthode EBC 9.26 par spectrophotométrie.

Le terme « sucre » désigne tout composé choisi parmi les oses, les osides dont les polysaccharides amylacés et non amylacés, les homosaccharides et les hétéros saccharides. On peut citer à titre d'exemples non limitatifs de sucre, les dextrines dont la maltodextrine, le saccharose, le maltose, le glucose, le fructose, le maltotétraose, le maltotriose et le sucrose.

Selon l'invention, une enzyme de type dextrinase est une enzyme qui est apte à catalyser la transformation des dextrines en glucose et maltose, notamment par hydrolyse des liaisons glucosidiques alpha 1-4 et alpha 1-6.

### EXEMPLE

On concasse 550 kg de malt 2 rang type Pilsen présentant un degré de coloration 4. Le malt doit de préférence contenir suffisamment d'enzymes naturelles pour un brassage sans ajout d'enzyme(s). L'utilisation d'orge maltée facilite le filtrage : en effet, l'orge garde sa paille au battage. Le produit obtenu par concassage contient 15% de farine, 65% de gruaux et le reste de paille, ce qui permet d'avoir un matériau filtrant.

On mélange le malt avec de l'eau à 98° pour porter le mélange à 50°C tout en le remuant de manière à réaliser la protéolyse du malt. On ajoute ensuite à la maïsche ainsi formée de l'eau à 98°C de façon à ce que la température de la maïsche monte jusqu'à 63°C durant un palier intermédiaire pour favoriser l'action des bêta amylases. Cette étape est mise en oeuvre par la méthode dite d'infusion (le malt infusant dans l'eau) de manière à favoriser la dégradation de l'amidon en sucres. On ajoute davantage d'eau à 98°C de manière à ce que la maïsche atteigne une température de 72°C ce qui favorise l'action des alpha amylases contenues dans le malt. On utilise 4 L d'eau par Kg de malt. On filtre le mélange. On vérifie par dosage à l'eau iodée l'absence d'amidon. On fait bouillir la phase liquide obtenue par filtration durant 2 heures ce qui provoque la coagulation des protéines de haut poids moléculaire. Durant ces deux heures d'ébullition on ajoute 2640 g de houblon. On refroidit au moyen d'un échangeur de chaleur le moût ainsi obtenu jusqu'à 19°C. On ajoute alors 11 litres de levures pâteuse de souche *Saccharomyce cerevisiae* de bière. On ajoute également des dextrinases (Endozym^{®}AGP 120) de manière à ce que leur concentration soit égale à 10 g pour 100 L du mélange. On fait fermenter la bière ainsi obtenue pendant 7 jours à 24°C sans apport de chaleur car la fermentation est exothermique. La bière est ensuite mise au froid pendant 15 jours à 0°C. Après 15 jours elle est mise en bouteille et l'on ajoute 1g d'au moins un sucre simple, apte à être consommé pendant la fermentation de la levure, pour 100ml de bière. Ce sucre simple peut être du saccharose, du maltose ou du glucose, par exemple. La bière est mise en chambre de fermentation à 24° pendant 15 jours. Cela permet la prise de mousse et permet de baisser encore le taux de sucres car les enzymes ajoutées sont encore actives.

### ANALYSE DE LA BIERE

0,75 L de la bière ainsi obtenue ont été analysés.

La teneur totale en hydrates de carbone est de 0,17 g pour 100 ml mesurée par la méthode 9.26 EBC (European Brassery Convention). Le pH est de 3,99. La valeur énergétique est de 39 Kcal pour 100g. Le degré d'alcool est de 6,19 °.

## Revendications

1. Procédé de fabrication d'une bière selon lequel on prépare un moût par brassage d'un mélange contenant de l'eau et du malt d'une céréale ou un mélange de malts, puis après refroidissement dudit moût, on ajoute de la levure *Saccharomyces cerevisiae,* ledit procédé étant **caractérisé en ce qu'**après refroidissement dudit moût, on ajoute une enzyme choisie parmi les dextrinases, lesdites dextrinases étant des enzymes aptes à catalyser la transformation des dextrines en glucose et maltose par hydrolyse des liaisons glucosidiques alpha 1-4 et alpha 1-6..

2. Procédé selon la revendication 1, **caractérisé en ce que** l'on refroidit ledit mélange à une température sensiblement égale ou supérieure à 13°C et sensiblement égale ou inférieure à 21°C et notamment sensiblement égale à 19°C.

3. Procédé selon l'une quelconque des revendications 1 et 2, **caractérisé en ce que** pour brasser ledit mélange d'eau et de malt(s) :
- on chauffe ledit mélange avec un premier palier à une température sensiblement égale ou supérieure à 45°C et sensiblement égale ou inférieure à 55°C, notamment sensiblement égale à 50°C pendant une durée sensiblement égale ou supérieure à 10 minutes et sensiblement égale ou inférieure à 20 min, notamment sensiblement égale à 15 minutes, pour réaliser la protéolyse ;
- on chauffe durant un second palier à une température sensiblement égale ou supérieure à 68°C et sensiblement égale ou inférieure à 75°C, notamment sensiblement égale à 72°C, pour favoriser l'action des alpha amylases ;
- on filtre ledit mélange obtenu et éventuellement on rince les drêches obtenues ;
- on porte à ébullition la phase liquide obtenue par filtration pendant une durée sensiblement égale ou supérieure à 1 heure et sensiblement égale ou inférieure à 3 heures, de préférence sensiblement égale à 2 heures, en ajoutant éventuellement du houblon en une ou plusieurs fois durant ladite ébullition.

4. Procédé selon l'une quelconque des revendications 1 à 3, **caractérisé en ce que**, après ledit premier palier, on chauffe ledit mélange durant un palier intermédiaire à une température supérieure ou égale à 62°C et inférieure ou égale à 63°C et **en ce qu'**éventuellement on filtre ledit mélange sans réaliser ledit deuxième palier de chauffe.

5. Procédé selon l'une quelconque des revendications 1 à 4, **caractérisé en ce que** l'on maintient le pH du mélange obtenu après refroidissement à une valeur sensiblement égale ou supérieure à 4,5 et sensiblement égale ou inférieure à 6,5 et de préférence à une valeur sensiblement égale à 5,2.

6. Procédé selon l'une quelconque des revendications précédentes, **caractérisé en ce qu'**on laisse fermenter ledit mélange obtenu après refroidissement et ajout de ladite enzyme et de ladite levure et **en ce que** l'on laisse la température dudit mélange en cours de fermentation atteindre une valeur sensiblement égale ou supérieure à 20°C et sensiblement égale ou inférieure à 30°C et notamment sensiblement égale à 24°C.

7. Procédé selon l'une quelconque des revendications précédentes, **caractérisé en ce que** l'on fait en outre fermenter une seconde fois ledit mélange pendant une durée sensiblement égale ou supérieure à 7 jours et sensiblement égale ou inférieure à 20 jours et notamment sensiblement égale à 15 jours à une température sensiblement égale ou supérieure à 0°C.

8. Procédé selon l'une quelconque des revendications précédentes, **caractérisé en ce que** l'on ajoute ladite dextrinase dans une quantité donnée telle que la concentration en dextrinase(s) ajoutée(s) est sensiblement égale ou supérieure à 5g/100L et sensiblement égale ou inférieure à 30g/100 L et notamment sensiblement égale à 10g/ 100 L.

9. Procédé selon l'une quelconque des revendications précédentes, **caractérisé en ce que** ledit malt est choisi parmi le malt d'orge, le malt de blé, le malt de sorgo et les mélanges d'au moins deux de ces malts.

10. Procédé selon l'une quelconque des revendications précédentes, **caractérisé en ce que** lors de la mise en bouteille, on ajoute au moins un sucre simple apte à être consommé par la fermentation de la levure.

11. Bière pouvant être obtenue selon le procédé selon l'une quelconque des revendications précédentes, **caractérisée en ce qu'**elle contient une concentration totale en hydrates de carbone sensiblement égale ou inférieure à 0,2g/100mL et notamment sensiblement égale à 0,17g/100 mL.

## Patentansprüche

1. Verfahren zur Herstellung eines Biers, bei dem eine Maische durch Brauen eines Gemisches hergestellt wird, welches Wasser und Malz eines Getreides oder ein Gemisch aus Malzsorten enthält, danach nach Abkühlen der Maische die Hefe *Saccharomyces cerevisiae* beigegeben wird, wobei das Verfahren **dadurch gekennzeichnet ist, dass** nach dem Abkühlen der Maische ein Enzym beigegeben wird, das aus den Dextrinasen ausgewählt ist, wobei die Dextrinasen Enzyme sind, die imstande sind, die Umwandlung der Dextrine in Glucose und Maltose durch Hydrolyse der glycosidischen Bindungen Alpha 1-4 und Alpha 1-6 zu katalysieren.

2. Verfahren nach Anspruch 1, **dadurch gekennzeichnet, dass** das Gemisch auf eine Temperatur im Wesentlichen gleich oder über 13°C und im Wesentlichen gleich oder unter 21°C und insbesondere im Wesentlichen gleich 19°C abgekühlt wird.

3. Verfahren nach einem der Ansprüche 1 und 2, **dadurch gekennzeichnet, dass** zum Brauen des Gemisches aus Wasser und Malz(en):
- das Gemisch mit einer ersten Phase auf eine Temperatur im Wesentlichen gleich oder über 45°C und im Wesentlichen gleich oder unter 55°C, insbesondere im Wesentlichen gleich 50°C für eine Dauer von im Wesentlichen gleich oder länger als 10 Minuten und im Wesentlichen gleich oder kürzer als 20 Minuten, insbesondere im Wesentlichen gleich 15 Minuten erhitzt wird, um die Proteolyse zu realisieren;
- in einer zweiten Phase auf eine Temperatur im Wesentlichen gleich oder über 68°C und im Wesentlichen gleich oder unter 75°C, insbesondere im Wesentlichen gleich 72°C erhitzt wird, um die Wirkung der Alpha-Amylasen zu fördern;
- das erhaltene Gemisch gefiltert wird, und die erhaltene Schlempe eventuell gespült wird;
- die durch die Filterung erhaltene flüssige Phase für eine Dauer im Wesentlichen gleich oder länger als 1 Stunde und im Wesentlichen gleich oder kürzer als 3 Stunden, vorzugsweise im Wesentlichen gleich 2 Stunden unter Beigabe eventuell von Hopfen ein- oder mehrmals während des Aufkochens zum Aufkochen gebracht wird.

4. Verfahren nach einem der Ansprüche 1 bis 3, **dadurch gekennzeichnet, dass** das Gemisch nach der ersten Phase während einer Zwischenphase auf eine Temperatur größer oder gleich 62°C und kleiner oder gleich 63°C erhitzt wird, und dadurch, dass das Gemisch eventuell gefiltert wird, ohne die zweite Erhitzungsphase zu realisieren.

5. Verfahren nach einem der Ansprüche 1 bis 4, **dadurch gekennzeichnet, dass** der erhaltene pH-Wert des Gemisches nach dem Abkühlen auf einem Wert im Wesentlichen gleich oder größer 4,5 und im Wesentlichen gleich oder kleiner 6,5, und vorzugsweise auf einem Wert im Wesentlichen gleich 5,2 gehalten wird.

6. Verfahren nach einem der vorstehenden Ansprüche, **dadurch gekennzeichnet, dass** das nach dem Abkühlen und Beigeben des Enzyms und der Hefe erhaltene Gemisch gären gelassen wird, und dadurch, dass man die Temperatur des Gemisches beim Gären einen Wert im Wesentlichen gleich oder über 20°C und im Wesentlichen gleich oder unter 30°C, und insbesondere im Wesentlichen gleich 24°C erreichen lässt.

7. Verfahren nach einem der vorstehenden Ansprüche, **dadurch gekennzeichnet, dass** das Gemisch weiter während einer Dauer von im Wesentlichen gleich oder länger als 7 Tagen und im Wesentlichen gleich oder kürzer als 20 Tagen und insbesondere im Wesentlich gleich 15 Tage bei einer Temperatur im Wesentlichen gleich oder über 0°C ein zweites Mal gären gelassen wird.

8. Verfahren nach einem der vorstehenden Ansprüche, **dadurch gekennzeichnet, dass** die Dextrinase in einer gegebenen Menge beigegeben wird, sodass die Konzentration an beigegebener (-n) Dextrinase(n) im Wesentlichen gleich oder größer 5 g/100 1 und im Wesentlichen gleich oder kleiner 30 g/100 1 und insbesondere im Wesentlichen gleich 10 g/100 1 ist.

9. Verfahren nach einem der vorstehenden Ansprüche, **dadurch gekennzeichnet, dass** das Malz aus dem Gerstenmalz, dem Weizenmalz, dem Sorghummalz und den Gemischen mindestens zweier dieser Malze ausgewählt ist.

10. Verfahren nach einem der vorstehenden Ansprüche, **dadurch gekennzeichnet, dass** bei der Flaschenabfüllung mindestens ein einfacher Zucker beigegeben wird, der imstande ist, durch das Gären der Hefe verbraucht zu werden.

11. Bier, das gemäß dem Verfahren nach einem der vorstehenden Ansprüche erhältlich ist, **dadurch gekennzeichnet, dass** es eine Gesamtkonzentration an Kohlenhydraten im Wesentlichen gleich oder kleiner 0,2 g/100 ml und insbesondere im Wesentlichen gleich 0,17 g/100 ml enthält.

## Claims

1. A method for producing a beer according to which a wort is prepared by brewing a mixture containing water and malt of a cereal or a malt mixture, then after cooling of said wort, the *Saccharomyces cerevisiae* yeast is added, said method being **characterized in that**, after cooling said wort, an enzyme selected from among dextrinases is added, said dextrinases being enzymes capable of catalyzing the transformation of the dextrins into glucose and maltose by hydrolysis of the alpha 1-4 and alpha 1-6 glycosidic bonds.

2. The method according to claim 1, **characterized in that** said mixture is cooled to a temperature substantially equal to or higher than 13°C and substantially equal to or lower than 21°C and in particular substantially equal to 19°C.

3. The method according to any one of claims 1 and 2, **characterized in that** said mixture of water and malt(s) is brewed by:
- heating said mixture with a first stage at a temperature substantially equal to or higher than 45°C and substantially equal to or lower than 55°C, in particular substantially equal to 50°C for a duration substantially equal to or longer than 10 minutes and substantially equal to or shorter than 20 min, in particular substantially equal to 15 minutes, in order to carry out the proteolysis;
- heating during a second stage at a temperature substantially equal to or higher than 68°C and substantially equal to or lower than 75°C, in particular substantially equal to 72°C, to promote the action of the alpha amylases;
- filtering said obtained mixture and possibly rinsing the obtained draff;
- bringing the liquid phase obtained by filtration to boil for a duration substantially equal to or longer than 1 hour and substantially equal to or shorter than 3 hours, preferably substantially equal to 2 hours, by possibly adding hop in one or more time(s) during said boiling.

4. The method according to any one of claims 1 to 3, **characterized in that**, after said first stage, said mixture is heated during an intermediate stage at a temperature higher than or equal to 62°C and lower than or equal to 63°C, and **in that** said mixture is possibly filtered without carrying out said second heating stage.

5. The method according to any one of claims 1 to 4, **characterized in that** the pH of the mixture obtained after cooling is maintained at a value substantially equal to or greater than 4.5, and substantially equal to or less than 6.5, and preferably at a value substantially equal to 5.2.

6. The method according to any one of the preceding claims, **characterized in that** said mixture obtained after cooling and addition of said enzyme and said yeast is left to ferment and **in that** the temperature of said mixture during fermentation is left to reach a value substantially equal to or higher than 20°C and substantially equal to or lower than 30°C and in particular substantially equal to 24°C.

7. The method according to any one of the preceding claims, **characterized in that** said mixture is further fermented a second time for a duration substantially equal to or longer than 7 days and substantially equal to or shorter than 20 days and in particular substantially equal to 15 days at a temperature substantially equal to or higher than 0°C.

8. The method according to any one of the preceding claims, **characterized in that** said dextrinase is added in a given amount such that the concentration of added dextrinase(s) is substantially equal to or higher than 5 g/100L, and substantially equal to or lower than 30 g/100L, and in particular substantially equal to 10 g/100L.

9. The method according to any one of the preceding claims, **characterized in that** said malt is selected from among the barley malt, the wheat malt, the sorghum malt and the mixtures of at least two of these malts.

10. The method according to any one of the preceding claims, **characterized in that**, during bottling, at least one simple sugar capable of being consumed by the fermentation of the yeast is added.

11. A beer which can be obtained according to the method according to any one of the preceding claims, **characterized in that** it contains a total concentration of carbohydrates substantially equal to or less than 0.2 g/100mL and in particular substantially equal to 0.17 g/100mL.
